(19) Europäisches Patentamt
European Patent Office
Office européen des brevets

(11) **EP 2 789 587 A1**

(12) **EUROPEAN PATENT APPLICATION**
published in accordance with Art. 153(4) EPC

(43) Date of publication:
**15.10.2014  Bulletin 2014/42**

(21) Application number: **12855878.0**

(22) Date of filing: **30.11.2012**

(51) Int Cl.:
*C03B 5/235* (2006.01)      *C03B 5/03* (2006.01)
*C03B 5/43* (2006.01)       *C03C 3/087* (2006.01)
*C03C 3/091* (2006.01)      *C03C 3/093* (2006.01)

(86) International application number:
**PCT/JP2012/081201**

(87) International publication number:
**WO 2013/084832 (13.06.2013 Gazette 2013/24)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **06.12.2011  JP 2011266720**

(71) Applicant: **Asahi Glass Company, Limited Tokyo 100-8405 (JP)**

(72) Inventors:
  • **TOKUNAGA, Hirofumi**
    **Tokyo 100-8405 (JP)**

  • **KOIKE, Akio**
    **Tokyo 100-8405 (JP)**
  • **NISHIZAWA, Manabu**
    **Tokyo 100-8405 (JP)**
  • **TSUJIMURA, Tomoyuki**
    **Tokyo 100-8405 (JP)**

(74) Representative: **Müller-Boré & Partner Patentanwälte PartG mbB Friedenheimer Brücke 21 80639 München (DE)**

(54) **METHOD FOR MANUFACTURING ALKALI-FREE GLASS**

(57)  To provide a method suitable for manufacturing an alkali-free glass that solves the above-described disadvantages, has high strain point, low viscosity and low devitrification properties, and particularly is easily formed by float process. A method for manufacturing an alkali-free glass, including putting a glass raw material in a melting furnace, heating the glass raw material at a temperature of 1,400 to 1,800°C to thereby prepare a molten glass, and forming the molten glass into a sheet shape, wherein heating by combustion flame of a burner and electrical heating of the molten glass by a heating electrode arranged so as to be dipped in the molten glass in the melting furnace are used in combination in the heating in the melting furnace, and when an electrical resistivity of the molten glass at 1,400°C is defined as Rg ($\Omega$cm) and an electrical resistivity of a refractory constituting the melting furnace at 1,400°C is defined as Rb ($\Omega$cm), the glass raw material and the refractory are selected so as to satisfy Rb>Rg.

FIG. 1

EP 2 789 587 A1

## Description

Technical field

The present invention relates to a method for manufacturing an alkali-free glass suitable as a substrate glass for various displays and a substrate glass for a photomask.

Hereinafter, in the present description, the term "alkali-free" means that the content of alkali metal oxides ($Li_2O$, $Na_2O$ and $K_2O$) is 2,000 ppm or less.

Background Art

Conventionally, the following characteristics have been required in a substrate glass for various displays, particularly a substrate glass on the surface of which a metal or oxide thin film or the like is formed.

(1) In the case where an alkali metal oxide is contained, alkali metal ions diffuse in a thin film and deteriorate film characteristics. Therefore, the content of an alkali metal oxide is required to be extremely low, specifically the content of an alkali metal oxide is 2,000 ppm or less.
(2) It is required to have high strain point such that deformation of a glass and shrinkage (thermal shrinkage) due to structure stabilization of a glass can be minimally suppressed when a glass substrate is exposed to high temperature in a thin film formation step.
(3) It is required to have sufficient chemical durability against various chemicals used in semiconductor formation. Particularly, it is required to have durability against buffered hydrofluoric acid (BHF: a mixed solution of hydrofluoric acid and ammonium fluoride) used for etching $SiO_x$ or $SiN_x$, liquid chemicals containing hydrochloric acid used for etching ITO, various acids (nitric acid, sulfuric acid and the like) used for etching a metal electrode, and an alkali of a resist peeling solution.
(4) Defects (bubbles, striae, inclusions, pits, scratches and the like) are not present inside and on the surface thereof. In addition to the above requirements, the recent situations are as follows.
(5) Weight reduction of a display is required, and a glass itself is required to have small density.
(6) Weight reduction of a display is required, and thickness reduction of a substrate glass is required.
(7) In addition to the conventional amorphous silicon (a-Si) type liquid crystal display, a polycrystal silicon (p-Si) type liquid crystal display having slightly high heat treatment temperature has become to be prepared (a-Si: about 350°C → p-Si: 350 to 550°C).
(8) To increase temperature-rising/lowering rates of a heat treatment for producing a liquid crystal display to thereby increase productivity and enhance thermal shock resistance, a glass having small average coefficient of thermal expansion is required.

On the other hand, dry etching has been performed under dry conditions, and the requirement for resistance to BHF has been small. In conventional glasses, glasses containing 6 to 10 mol% of $B_2O_3$ for the purpose of improving resistance to BHF has been frequently used. However, $B_2O_3$ tends to decrease a strain point. Examples of an alkali-free glass free that does not contain $B_2O_3$ or contains small amount of $B_2O_3$ include the following glasses.
Patent Document 1 discloses a glass containing 0 to 5 wt% of $B_2O_3$, and Patent Document 2 discloses a glass containing 0 to 5 mol% of $B_2O_3$, and Patent Document 3 discloses a glass containing 0 to 8 mol% of $B_2O_3$.
However, the glass described in Patent Document 1 contains CaO in an amount of 11 mol% or more. Therefore, a devitrification temperature is high. Furthermore, the glass contains a large amount of phosphorus as impurities contained in limestone that is a raw material of CaO, and there is a concern that leak current is occurred in a transistor prepared on a glass substrate.
The glass described in Patent Document 2 contains SrO in an amount of 15 mol% or more. Therefore, an average coefficient of thermal expansion in a range of from 50 to 300°C exceeds $50 \times 10^{-7}/°C$.
The glass described in Patent Document 3 is classified into "a glass containing $SiO_2$ in an amount of from 55 to 67 wt% and $Al_2O_3$ in an amount of from 6 to 14 wt%" (group a) and "a glass containing $SiO_2$ in an amount of from 49 to 58 wt% and $Al_2O_3$ in an amount of from 16 to 23 wt%" (group b). Because the group a has large content of $SiO_2$, there is a problem that silica sand that is a raw material of $SiO_2$ does not completely melt in a melt and remains as unmelted silica sand, and because the group b has large content of $Al_2O_3$, there is a problem that a devitrification temperature is remarkably increased.
To solve the problems in the glasses described in Patent Documents 1 to 3, an alkali-free glass described in Patent Document 4 is proposed. The alkali-free glass described in Patent Document 4 has high strain point, can be formed by a float process, and is therefore considered to be suitable for use in a substrate for a display, a substrate for a photomask and the like.

An alkali-free glass used in applications of a substrate for a display, a substrate for a photomask and the like, specifically a sheet glass having an alkali-free glass composition, can be obtained as follows. Raw materials of each component are prepared so as to have a target component, and the resulting raw materials are put into a melting furnace and heated to a predetermined temperature to melt those. The molten glass is formed into a sheet glass having a predetermined thickness, followed by annealing and cutting, thereby obtaining a sheet glass.

In the case of a glass having high strain point, when raw materials are melt, the raw materials are required to be heated to high temperature of from 1,400 to 1,800°C. As a heating means in melting raw materials, it is general to heat the raw materials to a predetermined temperature by heating with combustion flame of a burner arranged at an upper part in a melting furnace. However, in the case of heating to high temperature of from 1,400 to 1,800°C, there is a concern that a refractory constituting the melting furnace is eroded. In the case where erosion of a refractory occurs, refractory components melt in a molten glass, leading to deterioration of quality of a glass to be manufactured, and this becomes a problem.

As described above, as a heating means in melting raw materials, it is general to heat the raw materials to a predetermined temperature by heating with combustion flame of a burner arranged at an upper part in a melting furnace. As an additional heating means, there is a method for electrically heating a molten glass in a melting furnace by providing a heating electrode so as to be dipped in the molten glass in the melting furnace and applying direct current voltage or alternating-current voltage to the heating electrode (see Patent Documents 5 and 6). The combined use of the heating by combustion flame of a burner and the electrical heating of a molten glass is effective to suppress erosion of a refractory constituting a melting furnace. Erosion of a refractory constituting a melting furnace is particularly liable to occur near the interface between a molten glass and an upper space. For this reason, the combined use of the electrical heating that heats only a molten glass without increasing an atmosphere temperature of an upper space is effective to suppress erosion of a refractory.

Prior Art Documents

Patent Documents

Patent Document 1: JP-A-62-113735
Patent Document 2: JP-A-5-232458
Patent Document 3: JP-A-8-109037
Patent Document 4: JP-A-10-45422
Patent Document 5: JP-A-2005-132713
Patent Document 6: JP-T-2009-523697 (the term "JP-T" used herein means a published Japanese translation of a PCT patent application)

Summary of the Invention

Problems that the Invention is to Solve

As the method for producing high quality p-Si TFT, a solid phase crystallization method is exemplified. However, further increase in a strain point is required to carry out this method.

A glass is required to have further low viscosity and low devitrification properties from the demand in glass production process, particularly in melting and in forming.

However, in the case of electrically heating an alkali-free glass, the following points should be noted.

Because the content of an alkali metal oxide in the alkali-free glass is lower than that of an alkali glass such as a soda lime glass, the amount of alkali metal ions present in the molten glass is small. Therefore, current is difficult to pass the alkali-free glass when it is electrically heating, as compared with the case of an alkali glass such as a soda lime glass. For this reason, there is a concern that current passes through not only the molten glass, but a refractory constituting a melting furnace, form a heating electrode placed in a melting furnace.

In the case where current passes through a refractory constituting a melting furnace, all of the quantity of electricity applied cannot be used in the electrical heating of the molten glass, and this is not preferred from the standpoint of efficiency of utilization of the quantity of electricity applied. Furthermore, in the case where current passes through a refractory constituting a melting furnace, current passes through a metal member (such as a metal frame) neighboring a melting furnace, and thus there is a risk of electrical shock. Furthermore, electrical heating occurs in a refractory, the temperature of a refractory is increased, and there is a concern of dissolution loss of the refractory.

An object of the present invention is to provide a method suitable for manufacturing an alkali-free glass that has high strain point, low viscosity and low devitrification properties, and particularly is easily formed by float process, by which the above disadvantages is solved.

Means for Solving the Problems

The present invention provides a method for manufacturing an alkali-free glass, comprising preparing a glass raw material so as to have the following glass composition (1) or (2), putting the glass raw material in a melting furnace, heating the glass raw material at a temperature of 1,400 to 1,800°C to thereby prepare a molten glass, and forming the molten glass into a sheet shape,
wherein heating by combustion flame of a burner and electrical heating of the molten glass by a heating electrode arranged so as to be dipped in the molten glass in the melting furnace are used in combination in the heating in the melting furnace, and
when an electrical resistivity of the molten glass at 1,400°C is defined as Rg ($\Omega$cm) and an electrical resistivity of a refractory constituting the melting furnace at 1,400°C is defined as Rb ($\Omega$cm), the glass raw material and the refractory are selected so as to satisfy Rb>Rg.

Glass composition (1): which contains, in terms of mol% on a basis of following oxides:

66 to 69% of $SiO_2$;
12 to 15% of $Al_2O_3$;
0 to 1.5% of $B_2O_3$;
6 to 9.5% of MgO;
7 to 9% of CaO;
0.5 to 3% of SrO;
0 to 1% of BaO; and
0 to 2% of $ZrO_2$, and
further comprising 200 to 2,000 ppm of an alkali metal oxide,
wherein MgO+CaO+SrO+BaO is 16 to 18.2%,
MgO/(MgO+CaO+SrO+BaO) is 0.35 or more,
MgO/(MgO+CaO) is 0.40 or more and less than 0.52,
MgO/(MgO+SrO) is 0.45 or more, and
the alkali metal oxide represented by $R_2O$ [ppm] and the $B_2O_3$ [%] satisfy the relationship of $600 \leq R_2O + B_2O_3 \times 10000/(9.14 \times EXP(0.0045 \times R_2O))$.

Glass composition (2): which contains, in terms of mol% on a basis of following oxides:

66 to 69% of $SiO_2$;
12 to 15% of $Al_2O_3$;
0 to 1.5% of $B_2O_3$;
6 to 9.5% of MgO;
7 to 9% of CaO;
0.5 to 3% of SrO;
0 to 1% of BaO; and
0 to 2% of $ZrO_2$, and
further comprising 600 to 2,000 ppm of an alkali metal oxide,
wherein MgO+CaO+SrO+BaO is 16 to 18.2%,
MgO/(MgO+CaO+SrO+BaO) is 0.35 or more,
MgO/(MgO+CaO) is 0.40 or more and less than 0.52, and
MgO/(MgO+SrO) is 0.45 or more.

Advantage of the Invention

According to the method in the present invention, an alkali-free glass having a strain point of 735°C or higher, an average coefficient of thermal expansion in a range of from 50 to 350°C of from $30 \times 10^{-7}$ to $40 \times 10^{-7}$/°C, a temperature $T_2$ at which a glass viscosity reaches $10^2$ dPa·s of 1,710°C or lower, a temperature $T_4$ at which a glass viscosity reaches $10^4$ dPa·s of 1,340°C or lower, and a devitrification temperature of 1,330°C or lower, can be preferably manufactured.

The alkali-free glass manufactured by the method in the present invention is particularly suitable for use in a substrate for a display in high strain point uses, a substrate for a photomask and the like, and is a glass particularly easily formed by a float process. Furthermore, the alkali-free glass manufactured by the method in the present invention can be used as a glass substrate for a magnetic disk.

In the present invention, by the combined use of heating by combustion frame of a burner and electrical heating of a molten glass in a melting furnace in the heating in a melting furnace, erosion of a refractory constituting a melting furnace during heating at high temperature of from 1,400 to 1,800°C can be suppressed. By this, components of the refractory are suppressed from being melted in a molten glass, and the quality of an alkali-free glass manufactured is improved.

In the present invention, passing current through a refractory constituting a melting furnace from a heating electrode is suppressed during electrical heating of a molten glass. By this, efficiency of utilization of the quantity of electricity applied during electrical heating is improved. Furthermore, in the case where current passes through a refractory constituting a melting furnace, there are concerns that current also passes through a metal member (such as metal frame) neighboring a melting furnace, and thus there is a risk of electrical shock, and electrical heating occurs in a refractory, which results in the increase of the temperature of the refractory, and the dissolution loss of a refractory. In the present invention, those concerns are solved.

Brief Description of the Drawings

FIG. 1 is a graph showing measurement results of electrical resistivity of the molten glass (Glass 1) and the refractory (Refractory 1 and Refractory 2) in Examples.
FIG. 2 is a graph showing measurement results of electrical resistivity of the molten glass (Glass 2) and the refractory (Refractory 1 and Refractory 2) in Examples.

Mode for Carrying Out the Invention

The method for manufacturing an alkali-free glass in the present invention is described below.

In the method for manufacturing an alkali-free glass in the present invention, the glass raw material prepared so as to have the following glass composition (1) or (2).

Glass composition (1): which contains, in terms of mol% on a basis of following oxides:

66 to 69% of $SiO_2$;
12 to 15% of $Al_2O_3$;
0 to 1.5% of $B_2O_3$;
6 to 9.5% of $MgO$;
7 to 9% of $CaO$;
0.5 to 3% of $SrO$;
0 to 1% of $BaO$; and
0 to 2% of $ZrO_2$, and
further comprising 200 to 2,000 ppm of an alkali metal oxide,
wherein $MgO+CaO+SrO+BaO$ is 16 to 18.2%,
$MgO/(MgO+CaO+SrO+BaO)$ is 0.35 or more,
$MgO/(MgO+CaO)$ is 0.40 or more and less than 0.52,
$MgO/(MgO+SrO)$ is 0.45 or more, and
the alkali metal oxide represented by $R_2O$ [ppm] and the $B_2O_3$ [%] satisfy the relationship of $600 \leq R_2O + B_2O_3 \times 10000/(9.14 \times EXP (0.0045 \times R_2O))$.

Glass composition (2): which contains, in terms of mol% on a basis of following oxides:

66 to 69% of $SiO_2$;
12 to 15% of $Al_2O_3$;
0 to 1.5% of $B_2O_3$;
6 to 9.5% of $MgO$;
7 to 9% of $CaO$;
0.5 to 3% of $SrO$;
0 to 1% of $BaO$; and
0 to 2% of $ZrO_2$, and
further comprising 600 to 2,000 ppm of an alkali metal oxide,
wherein $MgO+CaO+SrO+BaO$ is 16 to 18.2%,

MgO/(MgO+CaO+SrO+BaO) is 0.35 or more,
MgO/(MgO+CaO) is 0.40 or more and less than 0.52, and
MgO/(MgO+SrO) is 0.45 or more.

Composition range of each component is described below. In the case where the amount of $SiO_2$ is less than 66% (mol%, unless otherwise indicated, the same applies hereafter), a strain point is not sufficiently increased, and additionally a coefficient of thermal expansion is increased, and a density is increased. The amount of $SiO_2$ is preferably 67% or more. However, in the case where the amount exceeds 69%, meltability is deteriorated and a devitrification temperature is increased.

$Al_2O_3$ suppresses phase separation properties of a glass, decreases a coefficient of thermal expansion and increases a strain point. However, in the case where the amount of $Al_2O_3$ is less than 12%, this effect is not obtained, and additionally such a case leads to the case where other components increasing expansion are increased, resulting in increase in thermal expansion. The amount of $Al_2O_3$ is preferably 13.5% or more. However, in the case where the amount exceeds 15%, there is a concern that meltability of a glass is deteriorated and a devitrification temperature is increased. The amount is preferably 14.5% or less.

$B_2O_3$ improves melting reactivity of a glass and decreases a devitrification temperature. Therefore, $B_2O_3$ can be added up to 1.5%. However, in the case where the amount is too large, a strain point is decreased, and a photoelastic constant is increased. Therefore, the amount is preferably 1% or less. Furthermore, considering environmental load, it is preferred that $B_2O_3$ is not substantially contained (that is, $B_2O_3$ is not contained except for impurities unavoidably mixed; the same applies hereafter).

Of alkaline earth ones, MgO has the characteristics that does not increase expansion and does not excessively decrease a strain point. Furthermore, MgO improves meltability. However, in the case where the amount of MgO is less than 6%, this effect is not sufficiently obtained. Therefore, the amount is preferably 7% or more. On the other hand, in the case where the amount exceeds 9.5%, there is a concern that a devitrification temperature is increased. Therefore, the amount is preferably 8.5% or less.

Of alkaline earth ones, CaO has the characteristics that that does not increase expansion and does not excessively decrease a strain point, next to MgO. Furthermore, CaO improves meltability. However, in the case where the amount of CaO is less than 7%, this effect is not sufficiently obtained. Therefore, the amount is preferably 7.5% or more. On the other hand, in the case where the amount exceeds 9%, there is a concern that a devitrification temperature is increased and a large amount of phosphorus that is impurities in limestone ($CaCO_3$) that is a raw material of CaO is contaminated. Therefore, the amount is preferably 8.5% or less.

SrO does not increase a devitrification temperature of a glass and improves meltability. However, in the case where the amount of SrO is less than 0.5%, this effect is not sufficiently obtained. Therefore, the amount is preferably 1% or more. However, SrO tends to increase a coefficient of expansion as compared with MgO and CaO, and in the case where the amount exceeds 3%, there is a concern that a coefficient of expansion is increased.

BaO is not essential, but improves meltability and decreases a photoelastic constant. Therefore, BaO can be contained. However, BaO tends to increase a coefficient of expansion as compared with MgO and CaO, and in the case where the amount of BaO is too large, expansion and density of a glass are excessively increased. Therefore, the amount is 1% or less. It is preferred that BaO is not substantially contained.

$ZrO_2$ decreases a glass melting temperature and accelerates precipitation of crystals during baking, and therefore may be contained in an amount of up to 2%. In the case where the amount of $ZrO_2$ exceeds 2%, a glass becomes unstable, or a dielectric constant ε of a glass is increased. Therefore, the amount is preferably 1.5% or less, and it is more preferred that $ZrO_2$ is not substantially contained.

In the case where the total amount of MgO, CaO, SrO and BaO is less than 16%, meltability becomes poor. The total amount is preferably 17% or more. However, in the case where the total amount is larger than 18.2%, there is a concern that the drawback that a coefficient of thermal expansion cannot be decreased occurs. The total amount is preferably 18% or less.

When the following three requirements are satisfied, a strain point can be increased without increasing a devitrification temperature, and furthermore a viscosity of a glass can be decreased.

MgO/(MgO+CaO+SrO+BaO) is 0.35 or more, and preferably 0.37 or more.

MgO/(MgO+CaO) is 0.40 or more and less than 0.52, and preferably 0.45 or more and less than 0.52.

MgO/(MgO+SrO) is 0.45 or more, and preferably 0.5 or more.

In the method for manufacturing an alkali-free glass in the present invention, because a molten glass in a melting furnace is electrically heated, an alkali metal oxide is contained in glass raw materials in an amount of from 200 to 2,000 ppm, and preferably from 600 to 2,000 ppm (mol).

As compared with an alkali glass such as a soda lime glass, in the alkali-free glass, the content of an alkali metal oxide is low and the amount of alkali metal ions present in the molten glass is small. Therefore, the alkali-free glass has low conductivity and is not inherently suitable for electrical heating.

In the present invention, by containing an alkali metal oxide in glass raw materials in an amount of 200 ppm or more, and preferably 600 ppm or more, alkali metal ions are increased in the molten glass, resulting in decrease in electrical resistivity of the molten glass. As a result, conductivity of the molten glass is improved, and electrical heating is possible.

The present inventors have found that when $B_2O_3$ is contained in a glass, a viscosity of the glass is decreased, and the electrical resistivity of the molten glass is reduced, and have found that the reduction effect is increased as the content of an alkali metal oxide is decreased. The present inventors have therefore conducted experiments and calculations on the relationship between the contents of $B_2O_3$ and alkali metal oxide of the alkali-free glass in the present invention and the electrical resistivity of the molten glass, at 1300°C to 1800°C. As a result, they have found the relationship between $B_2O_3$ (%) and an alkali metal oxide $R_2O$ (ppm) for satisfying Rb>Rg described hereinafter. The relationship is shown in the formula 1.

$$600 \leq R_2O + B_2O_3 \times 10000/(9.14 \times EXP\ (0.0045 \times R_2O)) \qquad \text{Formula 1}$$

That is, the alkali-free glass in the present invention can easily satisfy Rb>Rg by making the contents of $B_2O_3$ and alkali metal oxide satisfy the formula 1.

Here, in the case where the content of an alkali metal oxide is increased, alkali metal ions diffuse in a thin film, leading to deterioration of film characteristics, and this becomes a problem during the use as a substrate glass for various displays. However, in the case where the content of the alkali metal oxide in a glass composition is 2,000 ppm or less, preferably 1,500 ppm or less, more preferably 1,300 ppm or less, and still more preferably 1,000 ppm or less, such a problem does not occur.

Glass raw materials used in the present invention contain the alkali metal oxide in an amount of preferably 1,500 ppm or less, more preferably 1,300 ppm or less, and still more preferably 1,000 ppm or less. Furthermore, the alkali metal oxide is contained in an amount of preferably from 700 to 900 ppm, and more preferably from 700 to 800 ppm.

As the alkali metal oxide, $Na_2O$, $K_2O$ and $Li_2O$ are preferred, and from the standpoints of the effect of decreasing the electrical resistivity of a molten glass, costs of raw materials and balance, $Na_2O$ and $K_2O$ are more preferred, and $Na_2O$ is still more preferred.

It is preferred that the glass in the present invention does not substantially contain $P_2O_5$ so as not to cause deterioration in characteristics of a metal or oxide thin film provided on the surface of a glass when a glass is manufactured. To facilitate recycle of a glass, it is preferred that PbO, $As_2O_3$ and $Sb_2O_3$ are not substantially contained.

The alkali-free glass manufactured by the method in the present invention has relatively low meltability. Therefore, the following materials are preferably used as a raw material of each component.

(Silicon source)

Silica sand can be used as a silicon source of $SiO_2$. Use of the silica sand in which a median particle diameter $D_{50}$ is from 20 μm to 60 μm and preferably from 20 μm to 27 μm, the proportion of a particle having a particle diameter of 2 μm or less is 0.3 vol% or less, and the proportion of a particle having a particle diameter of 100 μm or more is 2.5 vol% or less suppresses agglomeration of the silica sand, and the silica sand can be melted. As a result, melting of silica sand becomes easy, and an alkali-free glass having less bubbles, high homogeneity and high flatness is obtained, and such a case is preferred.

The term "particle diameter" in the present description is a sphere equivalent diameter (in the present invention, it means a primary particle diameter) of silica sand, and specifically means a particle diameter in a particle size distribution of a powder measured by a laser diffraction/scattering method.

The term "median particle diameter $D_{50}$" in the present description means a particle diameter that, in a particle size distribution of a powder measured by a laser diffraction method, volume frequency of particles having a particle diameter larger than a certain particle diameter is 50% of that of the whole powder. In other words, in a particle size distribution of a powder measured by a laser diffraction method, the median particle diameter $D_{50}$ means a particle diameter when volume frequency is 50%.

The "proportion of a particle having a particle diameter of 2 μm or less" and "proportion of a particle having a particle diameter of 100 μm or more" in the present description are measured by, for example, measuring a particle size distribution by a laser diffraction/scattering method.

When the median particle diameter $D_{50}$ of silica sand is 25 μm or less, melting of silica sand becomes easier, and such a case is more preferred.

When the proportion of a particle having a particle diameter of 100 μm or more in silica sand is 0%, melting of silica sand becomes easier, and such a case is particularly preferred.

(Alkaline earth metal source)

An alkaline earth metal compound can be used as an alkaline earth metal source. Specific examples of the alkaline earth metal compound include: carbonates such as $MgCO_3$, $CaCO_3$, $BaCO_3$, $SrCO_3$ and $(Mg, Ca)CO_3$ (dolomite); oxides such as MgO, CaO, BaO and SrO; and hydroxides such as $Mg(OH)_2$, $Ca(OH)_2$, $Ba(OH)_2$ and $Sr(OH)_2$. When a hydroxide of an alkaline earth metal is contained in a part or the whole of the alkaline earth metal source, an amount of $SiO_2$ component unmelted during melting glass raw materials is decreased, and such a case is preferred. In the case where the amount of unmelted $SiO_2$ component contained in silica sand is increased, the unmelted $SiO_2$ is incorporated in bubbles when bubbles are generated in a molten glass, and gathers near a surface layer of the molten glass. By this, difference in composition ratio of $SiO_2$ is occurred between the surface layer of the molten glass and the part other than the surface layer. As a result, homogeneity of a glass is decreased, and additionally flatness is decreased.

When the content of the hydroxide of the alkaline earth metal is from 5 to 100 mol% (MO conversion, wherein M is an alkaline earth metal element), preferably from 15 to 100 mol% (MO conversion), more preferably from 30 to 100 mol% (MO conversion) and still more preferably from 60 to 100 mol% (MO conversion), out of 100 mol% (MO conversion) of the alkaline earth metal source, the amount of $SiO_2$ component unmelted during melting the glass raw material is decreased, and such a case is more preferred.

The amount of $SiO_2$ component unmelted during melting the glass raw material is decreased as a molar ratio of hydroxides in the alkaline earth metal source is increased. Therefore, the higher molar ratio of the hydroxides is preferred.

Specifically, as the alkaline earth metal source, a mixture of a hydroxide and carbonate of an alkaline earth metal, a hydroxide alone of an alkaline earth metal and the like can be used. At least one kind of $MgCO_3$, $CaCO_3$ and $(Mg, Ca)(CO_3)_2$ (dolomite) is preferably used as the carbonate. At least one kind of $Mg(OH)_2$ and $Ca(OH)_2$ is preferably used as the hydroxide of the alkaline earth metal, and $Mg(OH)_2$ is particularly preferably used.

(Boron source)

In the case where an alkali-free glass contains $B_2O_3$, a boron compound can be used as a boron source of $B_2O_3$. Specific examples of the boron compound include orthoboric acid ($H_3BO_3$), metaboric acid ($HBO_2$), tetraboric acid ($H_2B_4O_7$) and boric anhydride ($B_2O_3$). In the general manufacturing of an alkali-free glass, orthoboric acid is used from the standpoints of inexpensiveness and easy availability.

In the present invention, a boron compound containing boric anhydride in an amount of from 10 to 100 mass% ($B_2O_3$ conversion) out of 100 mass% ($B_2O_3$ conversion) of a boron source is preferably used as the boron source. When boric anhydride is contained in an amount of 10 mass% or more, agglomeration of glass raw materials is suppressed, and reduction effect of bubbles and improvement in homogeneity and flatness are obtained. The amount of the boric anhydride is more preferably from 20 to 100 mass%, and still more preferably from 40 to 100 mol%.

Orthoboric acid is preferred as the boron compound other than boric anhydride, from the standpoints of inexpensiveness and easy availability.

Other than the above components, ZnO, $Fe_2O_3$, $SO_3$, F, Cl and $SnO_2$ can be added to the alkali-free glass in the present invention in the total amount of 5% or less for the purpose of improving meltability, clarity and formability of a glass. The total amount is preferably 3% or less, more preferably 1% or less, still more preferably 0.5% or less, and particularly preferably 0.2% or less.

In the present invention, glass raw materials prepared so as to have the above composition are continuously put into a melting furnace and heated at 1,400 to 1,800°C to melt the raw materials.

In the heating in the melting furnace, the heating by combustion flame of a burner and the electrical heating of a molten glass in a melting furnace are used in combination.

The burner is arranged at an upper part in the melting furnace, and the heating is conducted by combustion flame of fossil fuels, specifically combustion flame of liquid fuels such as heavy oil and kerosene, and gas fuels such as LPG. During the combustion of those fuels, the fuel can be mixed with an oxygen gas to conduct the heating, and the fuel can be mixed with an oxygen gas and air to conduct the heating. By using those methods, water can be contained in a molten glass, and β-OOH value of the alkali-free glass to be manufactured can be adjusted.

On the other hand, the electrical heating of a molten glass in the melting furnace is conducted by applying direct current voltage or alternating-current voltage to a heating electrode provided at the bottom or side in the melting furnace so as to be dipped in the molten glass in the melting furnace. When the electrical heating is performed, it is preferred that potential difference between electrodes is maintained at 100 to 500V, as described hereinafter. To apply such direct current voltage, alternating-current utilizable as a commercial power source must be converted into direct current. Therefore, the application of alternating-current is preferred.

During the electrical heating of the molten glass, the application of alternating-current voltage so as to satisfy the requirements described below is preferred from the standpoints of suppression of electrolysis of the molten glass in the melting furnace and generation of bubbles thereby, and efficiency during the electrical heating.

Local current density: 0.01 to 2.0 A/cm$^2$, preferably 0.1 to 2.0 A/cm$^2$
Potential difference between electrodes: 20 to 500V, preferably 100 to 500V
Frequency of alternating-current voltage: 10 to 90Hz.

The local current density is more preferably from 0.2 to 1.7 A/cm$^2$, and still more preferably from 0.3 to 1.0 A/cm$^2$.
The potential difference between electrodes is preferably 30V or more, more preferably 40V or more, and still more preferably 100V or more, and is preferably 480V or less, and more preferably 450V or less. The potential difference between electrodes is more preferably from 30 to 480V, and still more preferably from 40 to 450V.
The frequency of alternating-current voltage is more preferably from 30 to 80 Hz, and still more preferably from 50 to 60 Hz.
A material used in the heating electrode is required to have excellent conductivity and is additionally required to have excellent heat resistance and corrosion resistance to a molten glass from the fact that the material is dipped in a molten glass in a melting furnace.
Examples of the materials satisfying those requirements include rhodium, iridium, osmium, hafnium, molybdenum, tungsten, platinum and alloys thereof.
In the present invention, it is preferred that when a total of a heating quantity by the combustion flame of a burner and a heating quantity by the electrical heating of a molten glass in a melting furnace is defined as To (J/h), the heating quantity T (J/h) by the electrical heating preferably satisfies the following formula.

$$0.10 \times T_0 \leq T \leq 0.40 \times T_0$$

In the case where T is smaller than $0.10 \times T_0$, there is a concern that the effect obtained by the combined use of the electrical heating of a molten glass, that is, the effect of suppressing erosion of a refractory constituting a melting furnace, becomes insufficient.
In the case where T is larger than $0.40 \times T_0$, there is a concern that the temperature at the bottom of a melting furnace is increased and erosion of a refractory proceeds.
Because the melting furnace is heated to high temperature of from 1,400 to 1,800°C during melting glass raw materials, a refractory is used as a constituent material thereof. The refractory constituting the melting furnace is required to have corrosion resistance to a molten glass, mechanical strength and oxidation resistance, in addition to heat resistance.
Because a refractory constituting a melting furnace has excellent corrosion resistance to a molten glass, a zirconia-based refractory containing 90 mass% or more of $ZrO_2$ has been preferably used.
However, the zirconia-based refractory contains alkali components ($Na_2O$ and $K_2O$) as components reducing a viscosity of a matrix glass in the total amount of 0.12 mass% or more. Therefore, when the refractory is heated to high temperature of from 1,400 to 1,800°C, the refractory shows ionic conductivity by the presence of the alkali components. For this reason, there is a concern that current passes through not only a molten glass, but a refractory constituting a melting furnace from a heating electrode provided in a melting furnace during the electrical heating.
In the present invention, when an electrical resistivity of a molten glass at 1,400°C is defined as Rg ($\Omega$cm) and an electrical resistivity of a refractory constituting a melting furnace at 1,400°C is defined as Rb ($\Omega$cm), glass raw materials and a refractory constituting a melting furnace are selected so as to satisfy Rb>Rg.
As shown in Examples described hereinafter, the electrical resistivity of a molten glass and a refractory is decreased as a temperature is increased. The decrease in electrical resistivity with respect to the increase in temperature is large in a molten glass as compared with the case of a refractory. Therefore, if the electrical resistivity at 1,400°C has the relationship of Rb>Rg, the electrical resistivity of the refractory is always larger than that of the molten glass at the temperature of 1,400°C or higher, that is, in a temperature range of from 1,400 to 1,800°C.
When glass raw materials and a refractory constituting a melting furnace are selected so as to satisfy Rb>Rg, current is suppressed from passing through a refractory constituting a melting furnace from a heating electrode during the electrical heating.
In the present invention, the ratio (Rb/Rg) of Rb to Rg satisfies preferably Rb/Rg>1.00, more preferably Rb/Rg>1.05, and still more preferably Rb/Rg>1.10.
In the case of the alkali-free glass having the above-described composition, Rg can be adjusted by changing the content of alkali metal oxides in a range of from 200 to 2,000 ppm, and preferably from 600 to 2,000 ppm. Rg is decreased as the content of alkali metal oxides is increased.
Furthermore, Rg can be adjusted by changing a temperature $T_2$ at which a viscosity $\eta$ of the alkali-free glass to be manufactured reaches $10^2$ poises (dPs·s). Rg is decreased as $T_2$ is decreased.

In the case of preferred composition of a refractory described hereinafter, Rb can be adjusted by changing the content of alkali components ($Na_2O$ and $K_2O$). Furthermore, Rb can be adjusted by changing the proportion of $K_2O$ in the alkali components. Rb is increased as the content of alkali components ($Na_2O$ and $K_2O$) is decreased. Rb is increased as the proportion of $K_2O$ in the alkali components is increased.

Example of a refractory satisfying Rb>Rg with respect to the alkali-free glass having the above-described composition includes a high zirconia fused cast refractory containing, in mass%, from 85 to 91% of $ZrO_2$, from 7.0 to 11.2% of $SiO_2$, from 0.85 to 3.0% of $Al_2O_3$, from 0.05 to 1.0% of $P_2O_5$, from 0.05 to 1.0% of $B_2O_3$, and from 0.01 to 0.12% of $K_2O$ and $Na_2O$ in total, wherein the amount of $K_2O$ is equal to or larger than that of $Na_2O$.

The high zirconia fused cast refractory having the above composition is a refractory which contains zirconia ($ZrO_2$) as the major portion (85 to 91%) of the chemical component, is constituted by baddeleyite crystals as a main constituent component, shows excellent corrosion resistance to a molten glass, has small content of alkali components, and mainly contains $K_2O$ having large ionic radius and small mobility as an alkali component. Therefore, the electrical resistivity in a temperature range of from 1,400 to 1,800°C is large.

Composition range of each component is described below.

As the high zirconia fused cast refractory, a refractory having large content of $ZrO_2$ has excellent corrosion resistance to a molten glass. Therefore, the content of $ZrO_2$ is 85% or more, and preferably 88% or more. However, in the case where the content of $ZrO_2$ is larger than 91 %, the amount of a matrix glass is relatively decreased, volume change due to displacement (that is, transformation) of baddeleyite crystals cannot be absorbed, and resistance to heat cycle is deteriorated. Therefore, the content of $ZrO_2$ is 91% or less.

$SiO_2$ is an essential component to form a matrix glass buffering stress generated in a refractory, and is required to be contained in an amount of 7.0% or more to obtain a crack-free full scale fused cast refractory. However, in the case where the content of $SiO_2$ component is larger than 11.2%, corrosion resistance to a molten glass is decreased. Therefore, the content of $SiO_2$ is 11.2% or less, and preferably 10.0% or less.

$Al_2O_3$ plays a role of adjusting the relationship between a temperature of a matrix glass and a viscosity of the matrix glass, and further has the effect of reducing the content of $ZrO_2$ in the matrix glass. In the case where the content of $ZrO_2$ in the matrix glass is small, precipitation in the matrix glass of zircon ($ZrO_2 \cdot SiO_2$) crystals observed in the conventional refractory is suppressed, and cumulative tendency of residual volume expansion is remarkably decreased.

To effectively reduce the content of $ZrO_2$ in a matrix glass, the content of $Al_2O_3$ in a refractory is 0.85% or more, and preferably 1.0% or more. The content of $Al_2O_3$ is 3.0% or less so as not to cause the quality change of the matrix glass by the precipitation of crystals such as mullite, and the occurrence of cracks in the refractory, when the refractory is cast or used.

Therefore, the content of $Al_2O_3$ in the high zirconia fused cast refractory is from 0.85 to 3.0%, and preferably from 1.0 to 3.0%. In the high zirconia fused cast refractory in which the composition of a refractory has been adjusted to such a range and has been cast, resistance to heat cycle, that is, volume increase by accumulation of residual volume expansion, is suppressed within a range free of practical problems, and chip-off phenomenon is remarkably improved.

When $B_2O_3$ and $P_2O_5$ are contained in addition to a small amount of alkali components, a viscosity of a matrix glass at a temperature of from 800 to 1,250°C is adjusted to an appropriate degree even though the content of alkali components is small, and even though heat cycle passing through a transition temperature range of baddeleyite crystals is received during the use, residual volume expansion is slight. Therefore, the tendency of causing cracks by accumulation of residual volume expansion is not shown.

$B_2O_3$ is mainly contained in a matrix glass together with $P_2O_5$, and is a component that co-acts with $P_2O_5$ in place of alkali components to soften the matrix glass, and additionally does not decrease the electrical resistivity of a refractory in a temperature range of from 1,400 to 1,800°C.

Because the amount of a matrix glass in a high zirconia fused cast refractory is small, when the content of $B_2O_3$ is 0.05% or more, the effect of adjusting the viscosity of the matrix glass is obtained. However, in the case where the content of $B_2O_3$ is too large, a fine fused cast refractory cannot be cast. Therefore, the content of $B_2O_3$ is from 0.05 to 1.0%, and preferably 0.10 to 1.0%.

Almost all of $P_2O_5$ is contained in a matrix glass together with $B_2O_3$ and alkali components, and $P_2O_5$ adjusts (softens) a viscosity of a matrix glass in a transition temperature range of baddeleyite crystals, thereby preventing occurrence of cracks due to stress generated by volume change associated with transition of baddeleyite crystals. Furthermore, $P_2O_5$ and $B_2O_3$ are components which are not considered to cause coloring of a glass even though a refractory elutes in a glass when the refractory is used in a glass melting furnace. Moreover, when $P_2O_5$ is added to refractory raw materials, melting of the refractory raw materials becomes easy. Therefore, there is an advantage that consumption of electric power required to cast a refractory can be reduced.

The amount of a matrix glass in a high zirconia fused cast refractory is small. Therefore, even though the content of $P_2O_5$ in the refractory is small, the content of $P_2O_5$ in the matrix glass is relatively large, and the effect of adjusting a viscosity of a matrix glass is obtained when $P_2O_5$ is contained in the refractory in an amount of 0.05% or more. In the case where the content of $P_2O_5$ is larger than 1.0%, the properties of a matrix glass are changed, thereby showing the tendency of facilitating residual volume expansion of a refractory and occurrence of cracks due to its accumulation. Therefore, the content of $P_2O_5$ in the refractory suitable for the adjustment of a viscosity of a matrix glass is from 0.05 to 1.0%, and preferably from 0.1 to 1.0%.

To achieve sufficiently large value of electrical resistivity of a refractory in a temperature range of from 1,400 to 1,800°C, the total content of alkali components composed of $K_2O$ and $Na_2O$ is 0.12% or less in terms of oxides, and $K_2O$ having small ion mobility in a glass occupies the amount of 50% or more, and preferably 70% or more, of the alkali components. However, in the case where the total content of $K_2O$ and $Na_2O$ is less than 0.01%, it becomes difficult to produce a fused cast refractory without cracks. Therefore, the total content of $K_2O$ and $Na_2O$ is 0.01% or more. Furthermore, the content of $K_2O$ is larger than the content of $Na_2O$ such that a crack-free high zirconia fused cast refractory can be stably cast. It is preferred that the content of $Na_2O$ is 0.008% or more and the content of $K_2O$ is from 0.02 to 0.10%.

When the total content of $Fe_2O_3$ and $TiO_2$ contained as impurities in raw materials is 0.55% or less, there is no problem on coloration in a melting furnace of the alkali-free glass having the above-described composition. The total content is preferably an amount not exceeding 0.30%. It is not necessary to contain alkaline earth oxides in a refractory, and the total content of the alkaline earth oxides is preferably less than 0.10%.

A refractory constituting a melting furnace is preferably a high zirconia fused cast refractory containing from 88 to 91% of $ZrO_2$, from 7.0 to 10% of $SiO_2$, from 1.0 to 3.0% of $Al_2O_3$, from 0.10 to 1.0% of $P_2O_5$ and from 0.10 to 1.0% of $B_2O_3$.

In the present invention, glass raw materials prepared so as to have the above composition are continuously put in a melting furnace, and heated to a temperature of from 1,400 to 1,800°C to thereby form a molten glass, and the molten glass is then formed into a sheet shape by a float process. More specifically, the molten glass is formed into a sheet having a predetermined thickness, and the sheet is annealed and then cut. Thus, an alkali-free glass can be obtained as a sheet glass.

The method for forming a sheet glass is preferably a float process, a fusion process, a roll-out process or a slot downdraw process. Considering productivity and the increasing size of a sheet glass, a float process is particularly preferred.

The alkali-free glass obtained by the method in the present invention (hereinafter referred to as the "alkali-free glass in the present invention") has a strain point of 735°C or higher, preferably 737°C or higher, and more preferably 740°C or higher, and heat shrinkage is suppressed during the production of a panel. Furthermore, a solid phase crystallization method can be applied as a production method of p-Si TFT.

In view of the fact that the alkali-free glass in the present invention has a strain point of 735°C or higher, the alkali-free glass is suitable for use in high strain point applications (for example, a substrate for a display for organic EL or a substrate for illumination, having a thickness of 0.7 mm or less, preferably 0.5 mm or less, and more preferably 0.3 mm or less, or a substrate for a display or a substrate for illumination, that is a thin sheet having a thickness of 0.3 mm or less, and preferably 0.1 mm or less). In the formation of a sheet glass having a thickness of 0.7 mm or less, 0.5 mm or less, 0.3 mm or less, and 0.1 mm or less, the pull-out speed during the formation tends to become fast. Therefore, a fictive temperature of a glass is increased, and compaction of a glass is liable to be increased. In this case, when a glass is a high strain point glass, compaction can be suppressed.

The alkali-free glass in the present invention has a glass transition point of preferably 760°C or higher, more preferably 770°C or higher, and still more preferably 780°C or higher.

The alkali-free glass in the present invention has an average coefficient of thermal expansion in a range of from 50 to 350°C of from $30\times10^{-7}$ to $40\times10^{-7}$/°C, has large thermal shock resistance, and the productivity can be increased when a panel is produced. In the alkali-free glass in the resent invention, the average coefficient of thermal expansion in a range of from 50 to 350°C is preferably from $35\times10^{-7}$ to $40\times10^{-7}$/°C.

The alkali-free glass in the present invention has a specific gravity of preferably 2.65 or less, more preferably 2.64 or less, and still more preferably 2.62 or less.

The alkali-free glass in the present invention has a temperature $T_2$ at which a viscosity $\eta$ reaches $10^2$ poises (dPa·s) of 1,710°C or lower, preferably 1,700°C or lower, and more preferably 1,690°C or lower. Therefore, melting of the glass is relatively easy.

The alkali-free glass in the present invention has a temperature $T_4$ at which a viscosity $\eta$ reaches $10^4$ poises of 1,340°C or lower, preferably 1,335°C or lower, and more preferably 1,330°C or lower. Therefore, the glass is suitable for forming by a float process.

The alkali-free glass in the present invention has a devitrification temperature of 1,330°C or lower, preferably lower than 1,300°C, and more preferably 1,290°C or lower. Therefore, the glass is easily formed by a float process.

The devitrification temperature in the present description is an average value of a maximum temperature at which crystals precipitate on the surface of and inside a glass and a minimum temperature at which crystals do not precipitate, by placing glass particles pulverized on a platinum dish, conducting heat treatment for 17 hours in an electric furnace controlled to a constant temperature, and observing with an optical microscope after the heat treatment.

Considering prevention of devitrification during forming a sheet glass, in the case of a float process, it is preferred to satisfy "$T_4$ - devitrification temperature $\geq$ 0°C", and preferably "$T_4$ - devitrification temperature $\geq$ 20°C".

The alkali-free glass in the present invention has Young's modulus of 84 GPa or more, preferably 86 GPa or more, more preferably 88 GPa or more, and still more preferably 90 GPa or more.

The alkali-free glass in the present invention preferably has a photoelastic constant of 31 nm/MPa/cm or less.

When a glass substrate has a birefringence by stress generated in a liquid crystal display panel production step or during using a liquid crystal display device, black display becomes gray display, and phenomenon that contrast of a liquid crystal display is decreased is sometimes recognized. When the photoelastic constant is 31 nm/MPa/cm or less, the phenomenon can be suppressed small. The photoelastic constant is preferably 30 nm/MPa/cm or less, more preferably 29 nm/MPa/cm or less, still more preferably 28.5 nm/MPa/cm or less, and particularly preferably 28 nm/MPa/cm or less.

Considering easiness of securing other properties, the alkali-free glass in the present invention has the photoelastic constant of preferably 23 nm/MPa/cm or more, and more preferably 25 nm/MPa/cm or more.

The photoelastic constant can be measured by a disk compression method (measurement wavelength: 546 nm).

The alkali-free glass in the present invention preferably has a dielectric constant of 5.6 or more.

In the case of an in-cell touch panel (having a touch sensor incorporated in a liquid crystal display panel) as described in JP-A-2011-70092, a glass substrate preferably has higher dielectric constant from the standpoints of improvement in sensing sensitivity of a touch sensor, decrease in drive voltage and electric power saving. When the dielectric constant is 5.6 or more, sensing sensitivity of a touch sensor is improved. The dielectric constant is preferably 5.8 or more, more preferably 6.0 or more, still more preferably 6.2 or more, and particularly preferably 6.4 or more.

The dielectric constant can be measured by the method described in JIS C-2141 (1992).

$\beta$-OH value of an alkali-free glass can be appropriately selected depending on the required characteristics of the alkali-free glass. To increase a strain point of the alkali-free glass, the $\beta$-OH value is preferably low. For example, in the case where the strain point is 735°C or higher, and preferably 745°C or higher, the $\beta$-OH value is preferably 0.3 mm$^{-1}$ or less, more preferably 0.25 mm$^{-1}$ or less, and still more preferably 0.2 mm$^{-1}$ or less.

The $\beta$-OH value can be adjusted by various conditions when raw materials are melted, such as the amount of water in glass raw materials, the concentration of water vapor in a melting furnace, and the residence time of a molten glass in a melting furnace. Examples of a method for adjusting the amount of water in glass raw materials include a method of using a hydroxide in place of an oxide, as glass raw materials (for example, using magnesium hydroxide ($Mg(OH)_2$) in place of magnesium oxide (MgO) as a magnesium source). Examples of a method for adjusting the concentration of water vapor in a melting furnace include a method of mixing fossil fuel with an oxygen gas and burning the mixture, when burning with a burner, and a method of mixing an oxygen gas with air and burning the mixture.

Examples

Electrical resistivity in a temperature range of from 1,400 to 1,800°C of a molten glass and a refractory (zirconia electrocast refractory) was measured.

Molten glasses (Glasses 1 and 2) were prepared by preparing raw materials of each component so as to have compositions shown below, and melting the resulting mixtures at a temperature of 1,600°C using a platinum crucible. With regard to the particle size of silica sand in the raw materials, a median particle diameter $D_{50}$ was 57 $\mu$m, the proportion of particles having a particle diameter of 2 $\mu$m or less was less than 0.1 vol%, and the proportion of particles having a particle diameter of 100 $\mu$m or more was less than 0.1 vol%. Magnesium hydroxide was used as a hydroxide of an alkaline earth metal, and was contained in an amount of 6 mol% (MO conversion) out of 100 mol% (MO conversion) of the alkaline earth metal source. In melting, a platinum stirrer was used for stirring to homogenize a glass. Electrical resistivity of the molten glass thus obtained was measured with the method described in the following literature in the state that the molten glass was held in a temperature range of from 1,400 to 1,800°C.

"Study on the Measuring Method of the Electrical Conductivity of Ionic Solutions and Melts, Yoshio Ohta, Akira Miyanaga, Kenji Morinaga and Tsutomu Yanagase, Journal of the Japan Institute of Metals, Vol. 45, No. 10 (1981) p1036-1043"

[Glass 1]

Composition (mol% on the basis of oxides)

| | |
|---|---|
| $SiO_2$ | 68.7% |

(continued)

| | |
|---|---|
| $Al_2O_3$ | 13.9% |
| $B_2O_3$ | 0% |
| MgO | 7.1% |
| CaO | 8.0% |
| SrO | 2.3% |
| BaO | 0% |
| $ZrO_2$ | 0% |
| Mg+CaO+SrO+BaO | 17.4% |
| MgO/(MgO+CaO+SrO+BaO) | 0.41 |
| MgO/(MgO+CaO) | 0.47 |
| MgO/(MgO+SrO) | 0.76 |

In addition to those components, $Na_2O$ was added by changing the amount to five different amounts of 400 ppm, 500 ppm, 600 ppm, 700 ppm and 1,000 ppm, on the basis of the oxide. Furthermore, 550 ppm of $Fe_2O_3$ was added to the five compositions, respectively.

Regarding zirconia electrocast refractories having the following chemical compositions and mineral compositions (Refractories 1 and 2), the electrical resistivity was measured by expanding (setting the sample in the electrical furnace, followed by heating) the measurement principle of volume resistivity (Section 14) of "JIS C-2141 (1992), Testing Method of Electrical Insulating Ceramic Materials" to high temperature in the state that the refractories were held in a temperature range of from 1,400 to 1,800°C.

[Glass 2]

Composition (mol% on the basis of oxides)

| | |
|---|---|
| $SiO_2$ | 68.4% |
| $Al_2O_3$ | 13.6% |
| $B_2O_3$ | 0.9% |
| MgO | 6.9% |
| CaO | 7.6% |
| SrO | 2.7% |
| BaO | 0% |
| $ZrO_2$ | 0% |
| Mg+CaO+SrO+BaO | 17.1% |
| MgO/(MgO+CaO+SrO+BaO) | 0.40 |
| MgO/(MgO+CaO) | 0.47 |
| MgO/(MgO+SrO) | 0.72 |

In addition to those components, $Na_2O$ was added by changing the amount to five different amounts of 400 ppm, 500 ppm, 600 ppm, 700 ppm and 1,000 ppm, on the basis of the oxide. Furthermore, 550 ppm of $Fe_2O_3$ was added to the five compositions, respectively.

[Refractory 1]

Chemical composition (mass%)

| | |
|---|---|
| $ZrO_2$ | 88 |
| $SiO_2$ | 9.3 |
| $Al_2O_3$ | 1.5 |

(continued)

| | |
|---|---|
| P$_2$O$_5$ | 0.1 |
| B$_2$O$_3$ | 0.8 |
| Fe$_2$O$_3$ | 0.05 |
| TiO$_2$ | 0.15 |
| Na$_2$O | 0.02 |
| K$_2$O | 0.04 |

Mineral composition (mass%)

| | |
|---|---|
| Baddeleyite | 88 |
| Glass phase | 12 |

[Refractory 2]

Chemical composition (mass%)

| | |
|---|---|
| ZrO$_2$ | 94.5 |
| SiO$_2$ | 4.0 |
| Al$_2$O$_3$ | 0.8 |
| P$_2$O$_5$ | 0.10 |
| B$_2$O$_3$ | 0.8 |
| Fe$_2$O$_3$ | 0.05 |
| TiO$_2$ | 0.15 |
| Na$_2$O | 0.4 |
| K$_2$O | 0.01 |

Mineral composition (mass%)

| | |
|---|---|
| Baddeleyite | 88 |
| Glass phase | 12 |

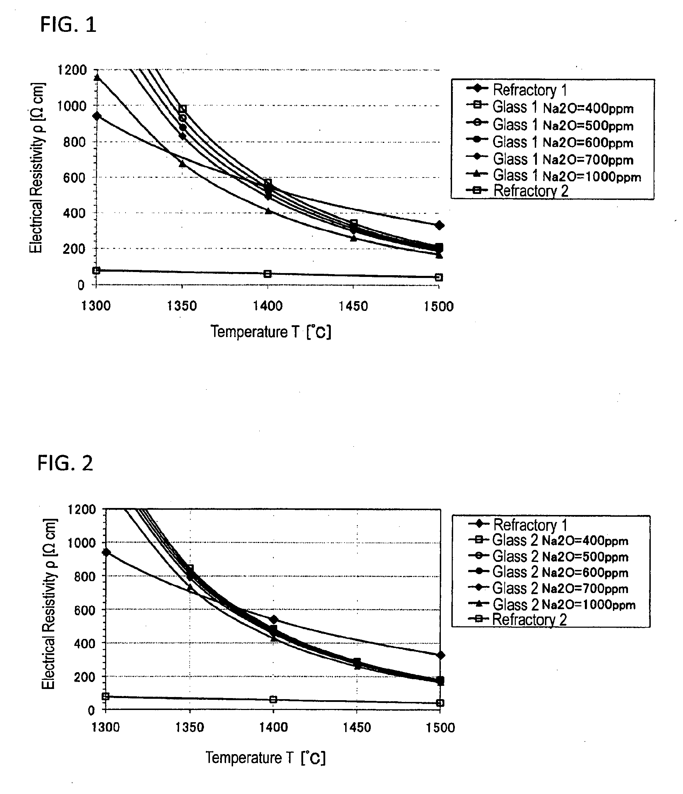

Measurement results of the electrical resistivity are shown in FIGs. 1 and 2. As is apparent from FIG. 1, in Refractory 1, in the case where the Na$_2$O content of Glass 1 (B$_2$O$_3$: 0%) is from 600 to 2,000 ppm (mol), the relationship of the electrical resistivity Rb at 1,400°C to electrical resistivity Rg of the molten glass at 1,400°C satisfied Rb>Rg. Furthermore, even in a temperature range of from 1,400 to 1,800°C, the electrical resistivity of Refractory 1 was higher than that of the molten glass. If a melting furnace is constituted of Refractory 1, it is considered that current is prevented from passing through the refractory constituting the melting furnace from a heating electrode during the electrical heating.

In the case where Na$_2$O content in Glass 1 is 400 ppm and 500 ppm, the electrical resistivities Rb and Rg at 1,400°C had the relationship of Rb<Rg.

On the other hand, in Refractory 2, even in any case where Na$_2$O content in Glass 1 is from 400 to 1,000 ppm, the relationship of the electrical resistivity Rb at 1,400°C to the electrical resistivity Rg of the molten glass at 1,400°C was Rb<Rg. Furthermore, even in the temperature range of from 1,400 to 1,800°C, the electrical resistivity of Refractory 2 was lower than that of the molten glass. If a melting furnace is constituted of Refractory 2, it is considered that current is prevented from passing through the refractory constituting the melting furnace from a heating electrode during the electrical heating.

As is apparent from FIG. 2, in Refractory 1, in the case where the Na$_2$O content of Glass 2 (B$_2$O$_3$: 1%) is from 400 to 2,000 ppm (mol), the relationship of the electrical resistivity Rb at 1,400°C to the electrical resistivity Rg of the molten glass at 1,400°C satisfied Rb>Rg. Furthermore, even in a temperature range of from 1,400 to 1,800°C, the electrical resistivity of Refractory 1 was higher than that of the molten glass. If a melting furnace is constituted of Refractory 1, it is considered that current is prevented from passing through the refractory constituting the melting furnace from a heating electrode during the electrical heating.

On the other hand, in Refractory 2, even in any case where $Na_2O$ content in Glass 2 is from 400 to 1,000 ppm, the relationship of the electrical resistivity Rb at 1,400°C to the electrical resistivity Rg of the molten glass at 1,400°C was Rb<Rg. Furthermore, even in the temperature range of from 1,400 to 1,800°C, the electrical resistivity of Refractory 2 was lower than that of the molten glass. If a melting furnace is constituted of Refractory 2, it is considered that current passes through the refractory constituting the melting furnace from a heating electrode during the electrical heating.

A mixture prepared by mixing raw materials of each component so as to be a target composition was put in a melting furnace constituted of Refractory 1, and melted at a temperature of from 1,500 to 1,600°C. Heating by combustion flame of a burner and electrical heating of the molten glass by a heating electrode arranged so as to be dipped in the molten glass in the melting furnace were used in combination for the heating of the melting furnace. When the electrical heating was performed, alternating-current voltage was applied to the heating electrode under the conditions of local current density of $0.5A/cm^2$, potential difference between electrodes of 300V, and frequency of 50 Hz.

When the total of heating quantity by combustion flame of a burner and heating quantity by electrical heating of a molten glass in a melting furnace is $T_0$(J/h), the heating quantity T (J/h) by the electrical heating satisfied the relationship of $T=0.30 \times T_0$.

The molten glass was flown out, and formed into a sheet shape, and the sheet was then annealed.

Table 1 shows a glass composition (unit: mol%), $\beta OH$ value of a glass (as an index of the content of water in a glass, measured by the following procedures; unit: $mm^{-1}$), an average coefficient of thermal expansion in a range of from 50 to 350°C (unit: $\times 10^{-7}$/°C), a strain point (unit: °C), a glass transition point (unit: °C), a specific gravity, a Young's modulus (GPa) (measured by an ultrasonic wave method), a temperature $T_2$ being a rough indication of meltability, as a high temperature viscosity value (temperature at which glass viscosity $\eta$ reaches $10^2$ poises, unit: °C), a temperature $T_4$ being a rough indication of formability of a float process, a fusion process, a roll-out process, a slot downdraw process and the like (temperature at which glass viscosity $\eta$ reaches $10^4$ poises, unit: °C), a devitrification temperature (unit: °C), a photoelastic constant (unit: nm/MPa/cm) (measured by a disk compression method (measuring wavelength: 546 nm)), and a dielectric constant (measured by the method described in JIS C-2141 (1992)). $Na_2O$ content is 700 ppm, respectively.

[Measurement method of $\beta OH$ value]

Regarding a glass sample, absorbance to light having a wavelength of from 2.75 to 2.95 $\mu m$ was measured, and the maximum value $\beta_{max}$ is divided by a thickness (mm) of the sample to thereby obtain $\beta OH$ value in a glass.

In Table 1, the values in parenthesis are calculated values.

[Table 1]

| Mol% | Example 1 | Example 2 | Example 3 | Example 4 | Example 5 | Example 6 | Example 7 | Example 8 | Example 9 |
|---|---|---|---|---|---|---|---|---|---|
| $SiO_2$ | 68.3 | 68.3 | 68.5 | 68.2 | 68.2 | 68.3 | 68.6 | 68.3 | 68.3 |
| $Al_2O_3$ | 13.9 | 13.9 | 13.5 | 14.3 | 14.3 | 13.5 | 14.3 | 13.5 | 12.9 |
| $B_2O_3$ | 0 | 0 | 0 | 0 | 0.5 | 0 | 0 | 0 | 0 |
| MgO | 8.1 | 7.2 | 8.5 | 7 | 7.8 | 9.1 | 6 | 7.5 | 7.7 |
| CaO | 7.8 | 8.2 | 8.5 | 8.5 | 8.7 | 8.6 | 9 | 8.6 | 8.8 |
| SrO | 1.9 | 2.4 | 1 | 2 | 0.5 | 0.5 | 2.1 | 1.5 | 1.7 |
| BaO | 0 | 0 | 0 | 0 | 0 | 0 | 0 | 0.6 | 0 |
| $ZrO_2$ | 0 | 0 | 0 | 0 | 0 | 0 | 0 | 0 | 0.6 |
| MgO+CaO+SrO+BaO | 17.8 | 17.8 | 18 | 17.5 | 17 | 18.2 | 17.1 | 18.2 | 18.2 |
| MgO/(MgO+CaO+SrO+BaO) | 0.46 | 0.40 | 0.47 | 0.40 | 0.46 | 0.50 | 0.35 | 0.41 | 0.42 |
| MgO/(MgO+CaO) | 0.51 | 0.47 | 0.50 | 0.45 | 0.47 | 0.51 | 0.40 | 0.47 | 0.47 |
| MgO/(MgO+SrO) | 0.81 | 0.75 | 0.89 | 0.78 | 0.94 | 0.95 | 0.74 | 0.83 | 0.82 |
| βOH | 0.3 | 0.3 | | | | | | | |
| Average coefficient of thermal expansion [$\times 10^{-7}$/°C] | 37.0 | 37.6 | 36.5 | 36.2 | 34.4 | 35.4 | 36.3 | (38.7) | (38.0) |
| Strain point (°C) | (742) | (745) | (742) | (746) | (744) | (742) | (749) | (738) | (742) |
| Glass transition temperature [°C] | 798 | 801 | 807 | 816 | 806 | 808 | 818 | | |
| Specific gravity | (2.60) | (2.60) | 2.53 | 2.55 | 2.52 | 2.52 | 2.55 | (2.56) | (2.55) |
| Young's modulus [GPa] | (87.1) | (87.2) | 87.0 | 79.9 | 84.2 | 87.0 | 87.1 | (87.0) | (87.0) |
| $T_2$[°C] | 1674 | 1677 | 1683 | 1685 | 1678 | 1686 | (1695) | (1680) | (1673) |
| $T_4$[°C] | 1328 | 1327 | 1322 | 1326 | 1320 | (1311) | (1349) | (1325) | (1323) |
| Devitrification point [°C] | 1295 | 1295 | 1287 | 1287 | 1312 | | | | |
| Photoelastic constant [nm/MPa/cm] | (29.9) | (30.0) | 29.7 | 29.7 | 29.7 | 29.7 | 29.7 | (29.5) | (29.8) |
| Dielectric constant | (6.46) | (6.47) | (6.46) | (6.47) | (6.40) | (6.48) | (6.43) | (6.56) | (6.54) |

As is apparent from the Table, in all of the glasses of the examples, an average coefficient of thermal expansion is low as from $30 \times 10^{-7}$ to $40 \times 10^{-7}$°C and a strain point is high as 735°C or higher. Thus, it is found that the glasses sufficiently withstand a heat treatment at high temperature.

Furthermore, from the fact that the strain point is 735°C or higher, the glasses are suitable for use in high strain point applications (for example, a substrate for a display for organic EL or a substrate for illumination, or a substrate for a display or a substrate for illumination, that is a thin sheet having a thickness of 100 $\mu$m or less).

The temperature $T_2$ being a rough indication of meltability is relatively low as 1,710°C or lower, making melting easy. The temperature $T_4$ being a rough indication of formability is 1,340°C or lower, and the devitrification temperature is 1,330°C or lower, and preferably lower than 1,330°C, and thus, it is considered that there is no trouble such as occurrence of devitrification during float molding.

The photoelastic constant is 31 nm/MPa/cm or less. Therefore, in the case of using as a glass substrate of a liquid crystal display, decrease in contrast can be suppressed.

Furthermore, the dielectric constant is 5.6 or more. Therefore, in the case of using as a glass substrate of an in-cell touch panel, sensing sensitivity of a touch panel is improved.

Although the present invention has been described in detail and by reference to the specific embodiments, it is apparent to one skilled in the art that various modifications or changes can be made without departing the spirit and scope of the present invention.

This application is based on Japanese Patent Application No. 2011-266720 filed on December 6, 2011, the content of which is incorporated herein by reference.

Industrial Applicability

The alkali-free glass in the present invention has high strain point, and is therefore suitable for use in a substrate for a display, a substrate for a photomask, and the like. The glass is further suitable for use in a substrate for a solar cell, and the like.

**Claims**

1. A method for manufacturing an alkali-free glass, comprising preparing a glass raw material so as to have the following glass composition, putting the glass raw material in a melting furnace, heating the glass raw material at a temperature of 1,400 to 1,800°C to thereby prepare a molten glass, and forming the molten glass into a sheet shape,
   wherein heating by combustion flame of a burner and electrical heating of the molten glass by a heating electrode arranged so as to be dipped in the molten glass in the melting furnace are used in combination in the heating in the melting furnace, and
   when an electrical resistivity of the molten glass at 1,400°C is defined as Rg ($\Omega$cm) and an electrical resistivity of a refractory constituting the melting furnace at 1,400°C is defined as Rb ($\Omega$cm), the glass raw material and the refractory are selected so as to satisfy Rb>Rg,
   the glass composition comprising, in terms of mol% on a basis of following oxides:

   66 to 69% of $SiO_2$;
   12 to 15% of $Al_2O_3$;
   0 to 1.5% of $B_2O_3$;
   6 to 9.5% of MgO;
   7 to 9% of CaO;
   0.5 to 3% of SrO;
   0 to 1% of BaO; and
   0 to 2% of $ZrO_2$, and
   further comprising 200 to 2,000 ppm of an alkali metal oxide,
   wherein MgO+CaO+SrO+BaO is 16 to 18.2%,
   MgO/(MgO+CaO+SrO+BaO) is 0.35 or more,
   MgO/(MgO+CaO) is 0.40 or more and less than 0.52,
   MgO/(MgO+SrO) is 0.45 or more, and
   the alkali metal oxide represented by $R_2O$ [ppm] and the $B_2O_3$ [%] satisfy the relationship of $600 \leq R_2O + B_2O_3 \times 10000/(9.14 \times EXP\,(0.0045 \times R_2O))$.

2. A method for manufacturing an alkali-free glass, comprising preparing a glass raw material so as to have the following glass composition, putting the glass raw material in a melting furnace, heating the glass raw material at a temperature of 1,400 to 1,800°C to thereby prepare a molten glass, and forming the molten glass into a sheet shape,
wherein heating by combustion flame of a burner and electrical heating of the molten glass by a heating electrode arranged so as to be dipped in the molten glass in the melting furnace are used in combination in the heating in the melting furnace, and
when an electrical resistivity of the molten glass at 1,400°C is defined as Rg ($\Omega$cm) and an electrical resistivity of a refractory constituting the melting furnace at 1,400°C is defined as Rb ($\Omega$cm), the glass raw material and the refractory are selected so as to satisfy Rb>Rg,
the glass composition comprising, in terms of mol% on a basis of following oxides:

66 to 69% of $SiO_2$;
12 to 15% of $Al_2O_3$;
0 to 1.5% of $B_2O_3$;
6 to 9.5% of MgO;
7 to 9% of CaO;
0.5 to 3% of SrO;
0 to 1% of BaO; and
0 to 2% of $ZrO_2$, and
further comprising 600 to 2,000 ppm of an alkali metal oxide,
wherein MgO+CaO+SrO+BaO is 16 to 18.2%,
MgO/(MgO+CaO+SrO+BaO) is 0.35 or more,
MgO/(MgO+CaO) is 0.40 or more and less than 0.52, and
MgO/(MgO+SrO) is 0.45 or more.

3. The method for manufacturing an alkali-free glass according to claim 1 or 2, wherein the glass raw material and the refractory are selected such that a ratio (Rb/Rg) of the Rb to the Rg satisfies the following formula:

$$Rb/Rg>1.00.$$

4. The method for manufacturing an alkali-free glass according to any one of claims 1 to 3, wherein when a total of a heating quantity by the combustion flame of the burner and a heating quantity by the electrical heating of the molten glass in the melting furnace is defined as To (J/h), the heating quantity T (J/h) by the electrical heating satisfies the following formula:

$$0.10 \times T_0 \leq T \leq 0.40 \times T_0.$$

5. The method for manufacturing an alkali-free glass according to any one of claims 1 to 4, wherein the refractory constituting the melting furnace is a high zirconia fused cast refractory containing, in mass% as chemical components of the refractory, 85 to 91% of $ZrO_2$, 7.0 to 11.2% of $SiO_2$, 0.85 to 3.0% of $Al_2O_3$, 0.05 to 1.0% of $P_2O_5$, 0.05 to 1.0% of $B_2O_3$, and 0.01 to 0.12% of $K_2O$ and $Na_2O$ in total, wherein an amount of $K_2O$ is equal to or larger than that of $Na_2O$.

6. The method for manufacturing an alkali-free glass according to any one of claims 1 to 5, wherein an alternating-current voltage having a frequency of from 30 to 80 Hz is applied to the heating electrode such that a local current density is from 0.01 to 2.0 A/cm$^2$ and a potential difference between electrodes is from 100 to 500V.

7. The method for manufacturing an alkali-free glass according to any one of claims 1 to 6, wherein a silica sand in which a median particle diameter $D_{50}$ is from 20 $\mu$m to 60 $\mu$m, a proportion of a particle having a particle diameter of 2 $\mu$m or less is 0.3 vol% or less, and a proportion of a particle having a particle diameter of 100 $\mu$m or more is 2.5 vol% or less is used as a silicon source of $SiO_2$ in the glass raw material.

8. The method for manufacturing an alkali-free glass according to any one of claims 1 to 6, wherein a compound containing a hydroxide of an alkaline earth metal in an amount of from 5 to 100 mol% (MO conversion, wherein M represents an alkaline earth metal element, and the same applies hereafter) out of 100 mol% (MO conversion) of an alkaline earth metal source is used as the alkaline earth metal source of MgO, CaO, SrO and BaO in the glass raw material.

9. The method for manufacturing an alkali-free glass according to any one of claims 1 to 6, wherein a silica sand in which a median particle diameter $D_{50}$ is from 20 $\mu$m to 60 $\mu$m, a proportion of a particle having a particle diameter of 2 $\mu$m or less is 0.3 vol% or less, and a proportion of a particle having a particle diameter of 100 $\mu$m or more is 2.5 vol% or less is used as a silicon source of $SiO_2$ in the glass raw material, and a compound containing a hydroxide of an alkaline earth metal in an amount of from 5 to 100 mol% (MO conversion, wherein M represents an alkaline earth metal element, and the same applies hereafter) out of 100 mol% (MO conversion) of an alkaline earth metal source is used as the alkaline earth metal source of MgO, CaO, SrO and BaO in the glass raw material.

## FIG. 1

## FIG. 2

<div align="center">

**INTERNATIONAL SEARCH REPORT**

</div>

| | International application No. |
|---|---|
| | PCT/JP2012/081201 |

**A. CLASSIFICATION OF SUBJECT MATTER**
*C03B5/235*(2006.01)i, *C03B5/03*(2006.01)i, *C03B5/43*(2006.01)i, *C03C3/087* (2006.01)i, *C03C3/091*(2006.01)i, *C03C3/093*(2006.01)i

According to International Patent Classification (IPC) or to both national classification and IPC

**B. FIELDS SEARCHED**

Minimum documentation searched (classification system followed by classification symbols)
C03B1/00-5/44, C03B8/00-8/04, C03B19/12-20/00, C03C1/00-14/00, C04B35/42-35/51

Documentation searched other than minimum documentation to the extent that such documents are included in the fields searched
| Jitsuyo Shinan Koho | 1922-1996 | Jitsuyo Shinan Toroku Koho | 1996-2013 |
| Kokai Jitsuyo Shinan Koho | 1971-2013 | Toroku Jitsuyo Shinan Koho | 1994-2013 |

Electronic data base consulted during the international search (name of data base and, where practicable, search terms used)
INTERGLAD

**C. DOCUMENTS CONSIDERED TO BE RELEVANT**

| Category* | Citation of document, with indication, where appropriate, of the relevant passages | Relevant to claim No. |
|---|---|---|
| A | JP 10-045422 A (Asahi Glass Co., Ltd.), 17 February 1998 (17.02.1998), claims; examples; tables 1 to 6; paragraph [0014] (Family: none) | 1-9 |
| A | JP 2000-302475 A (Carl-Zeiss-Stiftung), 31 October 2000 (31.10.2000), claims; paragraph [0003]; examples; table 1 & US 6329310 B1 & EP 1044932 A1 & DE 19916296 C & DE 50000712 D & TW 524785 B & KR 10-2001-0014636 A | 1-9 |

| ☒ Further documents are listed in the continuation of Box C. | ☐ See patent family annex. |
|---|---|

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 26 February, 2013 (26.02.13) | 12 March, 2013 (12.03.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

Form PCT/ISA/210 (continuation of second sheet) (July 2009)

**INTERNATIONAL SEARCH REPORT**

| International application No. |
| --- |
| PCT/JP2012/081201 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | WO 2011/001920 A1  (Asahi Glass Co., Ltd.), 06 January 2011 (06.01.2011), claims; examples; tables 1, 2 & CN 102471134 A        & EP 2450319 A1 & KR 10-2012-0104965 A   & TW 201107264 A | 1-9 |
| A | JP 2005-225738 A  (Asahi Glass Co., Ltd.), 25 August 2005 (25.08.2005), claims; paragraphs [0022] to [0035]; fig. 1 to 4 & KR 10-2006-0041944 A   & CN 1657451 A | 1-9 |
| A | WO 2010/116960 A1  (Asahi Glass Co., Ltd.), 14 October 2010 (14.10.2010), claims; examples; tables 1 to 4; paragraph [0067] & CN 102369170 A        & EP 2418189 A1 & JP 2010-260782 A       & KR 10-2012-0022715 A & TW 201040124 A | 5,6 |
| A | JP 06-287059 A  (Asahi Glass Co., Ltd.), 11 October 1994 (11.10.1994), claims; examples; tables 1, 2; paragraph [0001] & US 5466643 A          & DE 4403161 A & DE 4403161 A1          & FR 2701022 A | 5,6 |

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 62113735 A
- JP 5232458 A
- JP 8109037 A
- JP 10045422 A
- JP 2005132713 A
- JP 2009523697 T
- JP 2011070092 A
- JP 2011266720 A

**Non-patent literature cited in the description**

- **YOSHIO OHTA ; AKIRA MIYANAGA ; KENJI MORINAGA ; TSUTOMU YANAGASE.** Study on the Measuring Method of the Electrical Conductivity of Ionic Solutions and Melts. *Journal of the Japan Institute of Metals,* 1981, vol. 45 (10), 1036-1043